# EUROPEAN PATENT SPECIFICATION

(11) **EP 1 810 918 B1**
(45) Date of publication and mention of the grant of the patent: **18.11.2009**
(21) Application number: 07100653.0
(22) Date of filing: 17.01.2007
(51) Int. Cl.: B62M 7/12, B62M 23/02

(54) **Two-wheel vehicle with integral electric wheel-drive**
Zweiradfahrzeug mit integrierten elektrischen Radantrieb
Véhicule à deux roues avec entraînement électrique de roue intégré

(30) Priority: 24.01.2006 IT MI20060111
(43) Date of publication of application: 25.07.2007
(73) Proprietor: PIAGGIO & C. S.p.A., 56025 Pontedera (Pisa) (IT)
(72) Inventor: Masut, Lucio, 56030, S. PIETRO BELVEDERE (Pisa) (IT); Santucci, Mario Donato, 55044, MARINA DI PIETRASANTA (Lucca) (IT)
(74) Representative: Zanardo, Giovanni

(56) References cited:
- DE-A1- 19 732 430
- DE-C- 818 737
- US-A1- 2002 148 656
- US-A1- 2003 213 630
- US-A1- 2005 029 031

## Description

The present invention relates to a two-wheel vehicle with an integral electric wheel-drive.

Various types of two-wheel vehicles with an electric wheel-drive are currently available on the market, all characterized in that the electric motor is applied directly on the back wheel on which its driving action is exerted (wheel-drive).

It is known that, depending on the position of the wheel-drive with respect to the vehicle, the transfer of weights and consequently the balancing of the vehicle, especially when accelerating and braking, takes place in different ways.

Whereas, in fact, in acceleration the weight shifts towards the rear part of the vehicle, when braking the contrary occurs. This means that in a front wheel-drive vehicle, in the acceleration phase, the front part tends to rise with a consequent lightening of the driving wheels (or the driving wheel in the case of a two-wheel vehicle), which are generally also guiding wheels, with the result that, especially for increasing accelerations or on slippery surfaces, the wheels can lose their adherence and the vehicle can swerve towards the outside of the bend.

In a vehicle with a back-wheel drive, on the contrary (as in the case of two-wheel vehicles, in particular mopeds and motorcycles, with both traditional and electric wheel-drive) the problems of roadholding on bends are the opposite, i.e. following a strong acceleration or even a softer acceleration but immediately following previous braking (with the load that has shifted to the front part of the vehicle), the vehicle may tend to swerve in the rear part, pushing the vehicle towards the inside of the bend. Furthermore, in the case of braking, as the weight has shifted to the front part of the vehicle, the braking action of the engine is limited.

In view of what is specified above, there is evidently the necessity of availing of a two-wheel vehicle with an integral wheel-drive, and consequently being able, as is already the case with four-wheel vehicles with an integral wheel-drive, to avoid problems relating to weight distribution and roadholding as mentioned above.

A two-wheel vehicle of this type however must overcome a series of production problems, as, due to the different structure of the frame, it is not possible to transfer to the moped and motorcycle field the engine drive expedients that are adopted in the case of integral wheel-drive automobiles.

Document US 2003/213630 A1 discloses a two wheel vehicle according to the preamble of claim 1. Other two wheel vehicles provided with electric motors are shown, for example, in documents US 2005/029031 A1 and US 2002/148656 A1.

An objective of the present invention is therefore to solve the problems of the known art by providing a two-wheel vehicle with an integral electric wheel-drive equipped with an electric motor for each wheel, capable of providing the maximum wheel-drive in complete safety on any surface and with an excellent front and rear weight distribution.

A further objective of the present invention is to provide a two-wheel vehicle with an integral electric wheel-drive having extreme structural and functional simplicity. These and other objectives are achieved by the two-wheel vehicle with an integral electric wheel-drive according to the present invention, which has the characteristics of claim 1 enclosed.

Further characteristics and advantages of the present invention will appear more evident from the present description, provided for illustrative and nonlimiting purposes, with reference to the enclosed drawings, in which:
- figure 1 shows a side view of a two-wheel vehicle with an integral electric wheel-drive, in particular a moped, according to the present invention;
- figure 2 shows a perspective view of one of the grips of the driving handlebars of the moped of figure 1, close to which a wheel-drive selector is applied; and
- figure 3 shows a view of a wheel of the moped of figure 1.

With reference to the figures, these show a two-wheel vehicle with an integral electric wheel-drive according to the present invention, in particular a moped, indicated as a whole with 10.

The two-wheel vehicle 10 with an integral electric wheel-drive consists of two electric motor groups installed in the front wheel hub 11 and in the back wheel hub 12, respectively. The two motors are fed by an electric accumulator group, housed inside the frame 13 of the two-wheel vehicle 10, and which has the characteristic of being able to be extracted to allow transportation and recharging "at home". Alternatively, the recharging can be effected without the extraction of the accumulator, i.e. "on site", by means of a battery-charger installed on board, also housed inside the frame 13 and equipped with a wire with a plug for connection to the electric supply or, more generally, to an electric power source.

The electric motor drive can be supplied according to two different modes. Firstly by means of a handle accelerator situated on one of the grips 14 of the driving handlebars 15 and a suitable transducer (HALL effect probe, potentiometer, or other types of known transducers).

The wheel-drive mode can be suitably selected on the basis of the demands and requirements of the driver: by means of an appropriate switch selector 16 it is possible to pass from an integral wheel-drive (activation of the back wheel 12 and front wheel 11 both active), to a back wheel-drive alone (only the activation of the back wheel 12), to a front wheel-drive alone (only the activation of the front wheel 11). In the case of the version with a double active motor, moped performances are reached (40 km/h).

In the case of back wheel-drive alone, the electric motor drive is transmitted by means of the functioning of "assisted pedaling" (25 km/h), whereby part of the energy transmitted to the back wheel 12 is provided through a direct action on the pedals 17 and transmitted through the chain 18. A torque sensor consequently activates the rear motor which assists the pedaling.

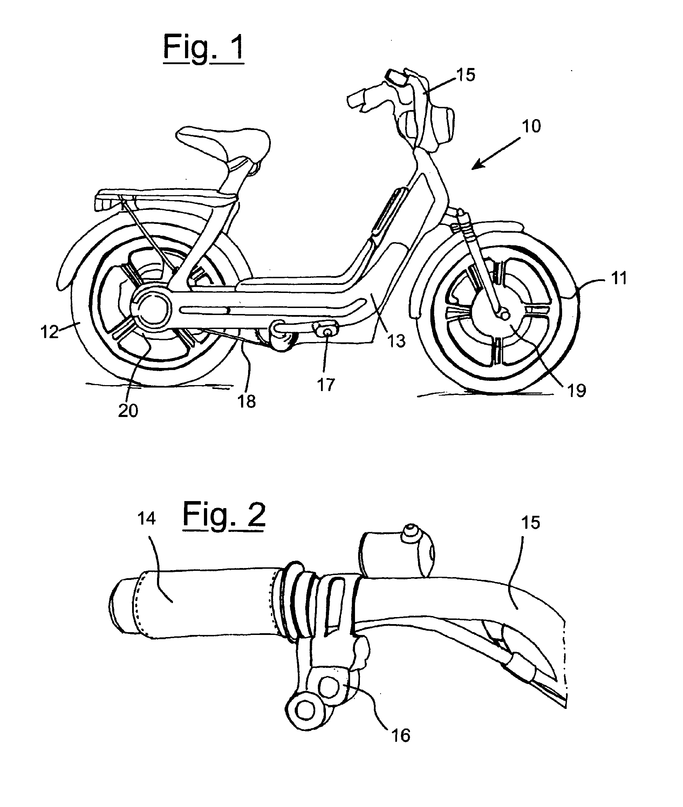

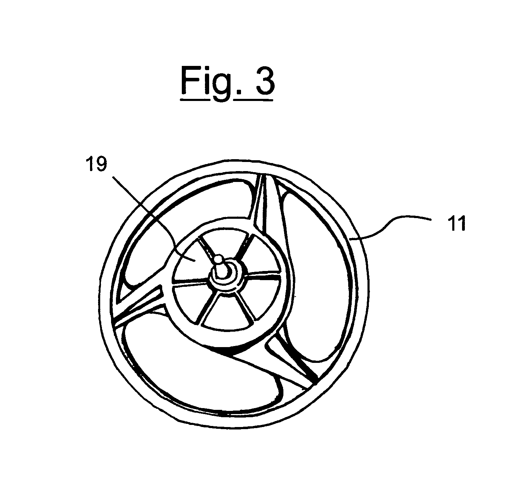

Figures 1 and 3 also show how the wheels 11, 12 of the vehicle 10 of the present invention, envisage respective hubs 19, 20 having larger dimensions than those normally used, in order to allow the housing of the respective electric motors.

The selection of the wheel-drive mode depends on various factors: performances required, autonomy and hold. The triggering of the integral wheel-drive is conveniently reserved for particular driving situations which, thanks to the selector 16, can be selected by the driver of the vehicle. The wheel-drive on all the wheels generally privileges performances and motility and is always advisable under low hold conditions, but can also be established on the basis of personal considerations of the driver.

In particular, the selector 16 allows the following wheel-drive modes to be selected:
- integral wheel-drive: both motors are activated, the electric wheel-drive is applied to both the front and back wheel;
- back wheel-drive: the functioning of the front motor is inhibited, the electric wheel-drive is applied to the back wheel only;
- front wheel-drive: the functioning of the back motor is inhibited, the electric wheel-drive is applied to the front wheel only;
- assisted pedaling: the wheel-drive provided by the electric motor and that provided by the user by acting on the pedals 17, act on the back wheel.

The control of the electric wheel-drive (in its various modes), the energy flow and recharging is managed by two electronic controllers (one for each electric motor).

The vehicle 10 according to the present invention is evidently not a simple low-cost and low-value electric bicycle, but a real "electric two-wheel vehicle" which is solid, reliable, of a high-value, safe and easy to drive.

The two-wheel vehicle 10 according to the present invention not only allows typical performances of vehicles of the same type with a non-electric wheel-drive to be reached, but also guarantees the optimum control of the weight distribution in all the running modes and minimizes consumption to that required.

A further advantage provided by the two-wheel vehicle 10 with an integral wheel-drive according to the present invention is in the braking phase, as, when motors with energy recovery are used when braking, the braking action of the engine can be exploited on both the front wheel 11 and on the back wheel 12.

Finally, numerous modifications and variants can obviously be applied to the two-wheel vehicle 10 thus conceived; furthermore all the details can be substituted by technically equivalent elements. In practice, the materials used, as also the dimensions, can vary according to technical demands.

## Claims

1. A two-wheel vehicle (10) with an integral electric wheel-drive comprising:
• two electric driving motors, a front wheel electric motor and a back wheel electric motor respectively, each electric motor being fed by a different electric accumulator group housed inside the frame (13) of said vehicle (10), each of said accumulator groups being also able to be extracted from the frame (13) of said vehicle (10) to allow transportation and recharging "at home";
• a driving handlebar (15), two pedals (17) and a chain (18) for transmission to the back wheel (12) of the wheel-drive provided by the user of the vehicle (10) by acting on said pedals (17); and
• a selector (16) whereby the wheel-drive on both wheels (11, 12), on the front wheel (11) alone or on the back wheel (12) alone is alternatively established,
**characterized in that** it comprises a torque sensor able to activate the back wheel electric motor (12) when at least part of the energy transmitted to the back wheel (12) is provided through a direct action on the pedals (17) and transmitted through the chain (18), thus enabling the functioning of "assisted pedaling", at least one battery-charger for the recharging of each accumulator group "on site", , and **in that** said electric motors are of energy recovery type, improving the braking action on both the front wheel (11) and on the back wheel (12) in the braking phase of the vehicle (10).

2. The two-wheel vehicle (10) with an integral electric wheel-drive according to claim 1, **characterized in that** said electric motors are respectively housed in the hub (19) of the front wheel (11) and in the hub (20) of the back wheel (12).

3. The two-wheel vehicle (10) with an integral electric wheel-drive according to claim 1, **characterized in that** the driving of the electric motors is provided by a handle accelerator situated on one of the grips (14) of said driving handlebar (15) and is transmitted by a transducer.

4. The two-wheel vehicle (10) with an integral electric wheel-drive according to claim 1, **characterized in that** said selector (16) is situated on one of the grips (14) of said driving handlebar (15).

5. The two-wheel vehicle (10) with an integral electric wheel-drive according to claim 1, **characterized in that** it comprises an electronic controller for each electric motor, for controlling the electric wheel-drive, the energy flow and recharging.

## Patentansprüche

1. Zweiradfahrzeug (10) mit einem integrierten elektrischen Radantrieb, mit:
zwei elektrischen Antriebsmotoren, einem Vorderradelektromotor und einem Hinterradelektromotor, wobei jeder Elektromotor von einer unterschiedlichen elektrischen Akkumulatorbatteriegruppe gespeist wird, die in dem Rahmen (13) des Fahrzeugs (10) aufgenommen ist, wobei jede der Akkumulatorbatteriegruppen auch aus dem Rahmen (13) des Fahrzeugs (10) herausnehmbar ist, um einen Transport und ein Aufladen "zu Hause" zu erlauben,
- einem Lenker (15), zwei Pedalen (17) und einer Kette (18) zur Übertragung der von dem Benutzer des Fahrzeugs (10) durch Einwirken auf die Pedale (17) bereitgestellten Radantriebskraft auf das Hinterrad (12), und
- einer Auswahleinrichtung (16), durch die alternativ der Radantrieb auf beide Räder (11, 12), auf das Vorderrad (11) alleine oder auf das Hinterrad (12) alleine zur Anwendung kommt,
**dadurch gekennzeichnet, dass** es einen Drehmomentsensor, der den Elektromotor des Hinterrads (12) zu aktivieren vermag, wenn zumindest ein Teil der auf das Hinterrad (12) übertragenen Energie durch eine direkte Einwirkung auf die Pedale (17) bereitgestellt und durch die Kette (18) übertragen wird, wodurch die Funktion des "unterstützten Pedaltretens" ermöglicht ist, und zumindest ein Batterieladegerät zum Aufladen jeder Akkumulatorbatteriegruppe "an Ort und Stelle" aufweist, und dass die Elektromotoren vom Energierückgewinnungstyp sind, die die Bremswirkung auf sowohl das Vorderrad (11) als auch das Hinterrad (12) in den Bremsphasen des Fahrzeugs (10) verbessern.

2. Zweiradfahrzeug (10) mit einem integrierten elektrischen Radantrieb nach Anspruch 1,
**dadurch gekennzeichnet, dass** die Elektromotoren jeweils in der Nabe (19) des Vorderrads (11) und in der Nabe (20) des Hinterrads (12) untergebracht sind.

3. Zweiradfahrzeug (10) mit einem integrierten elektrischen Radantrieb nach Anspruch 1,
**dadurch gekennzeichnet, dass** das Ansteuern der Elektromotoren durch einen auf einem der Griffe (14) des Lenkers (15) angeordneten Gasgriff geschieht und durch einen Wandler übertragen wird.

4. Zweiradfahrzeug (10) mit einem integrierten elektrischen Radantrieb nach Anspruch 1,
**dadurch gekennzeichnet, dass** die Auswahleinrichtung (16) an einem der Griffe (14) des Lenkers (15) angeordnet ist.

5. Zweiradfahrzeug (10) mit einem integrierten elektrischen Radantrieb nach Anspruch 1,
**dadurch gekennzeichnet, dass** es ein elektronisches Steuergerät für jeden Elektromotor zum Steuern des elektrischen Radantriebs, des Energieflusses und des Aufladens umfasst.

## Revendications

1. Véhicule (10) à deux roues à entraînement électrique intégré des roues, comprenant :
• deux moteurs électriques d'entraînement, respectivement un moteur électrique pour roue avant et un moteur électrique pour roue arrière, chaque moteur électrique étant alimenté par une batterie d'accumulateurs électriques différente logée à l'intérieur du châssis (13) dudit véhicule (10), chacune desdites batteries d'accumulateurs pouvant aussi être sortie du châssis (13) dudit véhicule (10) pour permettre de la transporter afin de la recharger "à domicile" ;
• un guidon de conduite (15), deux pédales (17) et une chaîne (18) pour transmettre à la roue arrière (12) l'entraînement de roues provoqué par l'utilisateur du véhicule (10) en agissant sur lesdites pédales (17) ; et
• un sélecteur (16) par lequel l'entraînement de roues pour les deux roues (11, 12), pour la roue avant (11) seule ou pour la roue arrière (12) seule est établi selon diverses possibilités,
**caractérisé en ce qu'**il comprend un détecteur de couple apte à activer le moteur électrique (12) de roue arrière quand au moins une partie de l'énergie transmise à la roue arrière (12) est produite par action directe sur les pédales (17) et transmise par l'intermédiaire de la chaîne (18), ce qui permet donc une fonction de "pédalage assisté", au moins un chargeur de batterie pour recharger "sur place" chaque batterie d'accumulateurs, et **en ce que** lesdits moteurs électriques sont du type à récupération d'énergie, ce qui améliore l'action de freinage à la fois sur la roue avant (11) et sur la roue arrière (12) lors de la phase de freinage du véhicule (10).

2. Véhicule (10) à deux roues à entraînement électrique intégré des roues selon la revendication 1, **caractérisé en ce que** lesdits moteurs électriques sont logés respectivement dans le moyeu (19) de la roue avant (11) et dans le moyeu (20) de la roue arrière (12).

3. Véhicule (10) à deux roues à entraînement électrique intégré des roues selon la revendication 1, **caractérisé en ce que** l'entraînement des moteurs électriques est assuré par un accélérateur au guidon situé sur l'une des poignées (14) dudit guidon de conduite (15) et est transmis par un transducteur.

4. Véhicule (10) à deux roues à entraînement électrique intégré des roues selon la revendication 1, **caractérisé en ce que** ledit sélecteur (16) est situé sur une des poignées (14) dudit guidon de conduite (15).

5. Véhicule (10) à deux roues à entraînement électrique intégré des roues selon la revendication 1, **caractérisé en ce qu'**il comprend un système électronique de commande pour chaque moteur électrique, afin de commander l'entraînement électrique des roues, la circulation de l'énergie et le rechargement.
